# EUROPÄISCHE PATENTSCHRIFT

(11) **EP 2 816 077 B1**
(45) Veröffentlichungstag und Bekanntmachung des Hinweises auf die Patenterteilung: **16.03.2016**
(21) Anmeldenummer: 14172897.2
(22) Anmeldetag: 18.06.2014
(51) Int. Cl.: C08J 7/00, C09J 7/00

(54) **Bitumen-Selbstklebebahn**
Self-adhesive bitumen web
Autocollant pour bitume

(30) Priorität: 20.06.2013 AT 504072013
(43) Veröffentlichungstag der Anmeldung: 24.12.2014
(73) Patentinhaber: Büsscher & Hoffmann Gesellschaft m.b.H., 4470 Enns (AT)
(72) Erfinder: Landl, Karl, 4407 Steyr (AT); Haider, Gerald, 4470 Enns (AT)
(74) Vertreter: Müllner, Martin

(56) Entgegenhaltungen:
- DE-A1- 19 851 808
- DE-U1- 20 009 382

## Beschreibung

### Technisches Gebiet-

Die vorliegende Erfindung betrifft eine Bitumen-Selbstklebebahn mit partieller Verklebung auf der Unterseite, wobei die Breite der Selbstklebebahn geringer als deren Länge ist.

### Stand der Technik

Selbstklebebahnen werden im Bauwesen seit langem verwendet. Sie bestehen aus Bitumen, welches durch eine Einlage armiert ist. Als Einlage kann eine Polyester- oder Glasfaserbahn oder auch eine Textilbahn verwendet werden. Solche Selbstklebebahnen werden üblicher Weise in Rollen geliefert, deren Länge z.B. 15 m beträgt und deren Breite z.B. 1 m beträgt.

Früher wiesen diese Selbstklebebahnen eine vollflächige Verklebung auf. Dabei hat sich herausgestellt, dass dadurch ein Dampfdruckausgleich unmöglich ist.

Es sind daher schon Vorschläge gemacht worden, Selbstklebebahnen nur teilflächig zu verkleben. So wurde in der WO 01/61103 A vorgeschlagen, Streifen, die parallel zur Längsrichtung der Bahn sind, mit einem nicht klebenden und nicht (oder nur schwer) schmelzenden Material abzudecken. Dies hat jedoch den Nachteil, dass die Bahn an den Enden nachbearbeitet werden muss (das nicht klebende und nicht schmelzende Material muss entfernt werden), damit die Bahn an der Breitseite mit der nächsten Bahn über die gesamte Breite verbunden werden kann.

In der DE 19851808 A wurde vorgeschlagen, Längs- und Querstreifen mit einem nicht klebenden und nicht schmelzenden Material abzudecken, sodass ein Muster von einander kreuzenden Streifen entsteht. Dampfdruck kann sich hier sowohl in Längs- als auch in Querrichtung ausgleichen. Problematisch ist hier, dass die Verbindung sowohl an den Breitseiten (wenn die Bahn "gestückelt" werden muss) als auch an den Längsseiten (also die Verbindung benachbarter Bahnen) ohne Nachbearbeitung nicht durchgehend möglich ist, sodass die Dichtigkeit der fertig verlegten Bahnen nicht gewährleistet ist.

Der Dampfdruckausgleich ist aber nicht bei allen Anwendungen solcher Selbstklebebahnen von Bedeutung. Ein anderes Problem bei vollflächiger Verklebung besteht darin, dass thermische Spannungen zwischen der Bahn und dem Untergrund nicht ausgeglichen werden können.

### Kurzbeschreibung der Erfindung

Es ist Aufgabe der vorliegenden Erfindung, eine Bitumen-Selbstklebebahn zu schaffen, die thermische Spannungen sowie Schrumpf- und Dehnungsvorgänge an verschiedenen Materialien ausgleichen kann und die ohne weitere Maßnahmen sowohl an den Längsseiten als auch an den Breitseiten mit einer weiteren Bahn durchgehend verbunden werden kann.

Diese Aufgabe wird erfindungsgemäß dadurch gelöst, dass auf der Unterseite Streifen mit einer nicht klebenden Schicht versehen sind, die parallel zur Breitseite der Selbstklebebahn angebracht sind und im Abstand zu den Längsseiten enden, wobei die Streifenvollständig voneinander getrennt sind.

Durch diese Anordnung der Streifen verbleibt eine klebende Fläche, die die Form einer Leiter aufweist. Die "Holme" der Leiter bilden an beiden Längsseiten jeweils einen klebenden Streifen, sodass die Verklebung an den Längsseiten unproblematisch ist. Die Verklebung an den Breitseiten erfolgt mit der ersten oder letzten "Sprosse" der Leiter.

Vorzugsweise ist die nicht klebende Schicht der Streifen durch aufgestreuten Sand, Vliese, Folien oder andere Trennmaterialien gebildet. Dies ist effektiv. Gegen Verkleben der aufgerollten Bahn in den Selbstklebebereichen ist unterseitig voll- oder teilflächig eine Trennfolie oder Kaschierfolie aufzubringen.

Weiters ist es günstig, wenn die Oberseite mit Ausnahme von zwei Randstreifen parallel zu den Längsseiten nicht klebend, z.B. bestreut ist, z.B. mit Sand, denn das Verkleben mit der benachbarten Bahn erfolgt nur entlang eines Randstreifens. Das Vorsehen von zwei Randstreifen hat den Vorteil, dass die Oberseite symmetrisch ist, dass also die Selbstklebebahnen an der Oberseite keine bevorzugte Richtung haben. Diese Randstreifen sind bis zur Verlegung mit Trennfolie oder Kaschierfolie abgedeckt, damit die aufgerollte Bahn nicht in sich verklebt.

Nach einer besonders bevorzugten Ausgestaltung ist vorgesehen, dass die Unterseite entlang einer Längsseite einen nicht klebenden Streifen aufweist und auf der anderen Längsseite einen klebenden Streifen aufweist. Um bei dem Vergleich mit der Leiter zu bleiben: einer der Holme hat also einen Abstand zur Längsseite der Bahn. Damit ergeben sich zwei Verlegemöglichkeiten:
1) Wenn man die Bahnen nur verkleben möchte und man die Bahnen von links nach rechts verlegt, dann legt man die Bahnen so, dass der klebende Streifen links liegt. In diesem Fall kommt beim Verlegen der nächsten Bahn der bis zum Rand klebende Streifen mit der zuvor verlegten Bahn in Kontakt.
2) Wenn man die Bahnen verflämmen möchte und man die Bahnen von links nach rechts verlegt, dann legt man die Bahnen so, dass der nicht klebende Streifen links liegt. In diesem Fall kann man die neu verlegte Bahn im Bereich dieses nicht klebenden Streifens anheben und mit dem Flämmgerät aufheizen, sodass die Bahn klebrig wird und beim Zurücklegen mit der zuvor verlegten Bahn verschmilzt.

Damit diese beiden Möglichkeiten realisiert werden können, muss die Oberseite an beiden Seiten einen Randstreifen aufweisen.

### Kurze Beschreibung der Zeichnungsfiguren

An Hand der beiliegenden Zeichnung wird die vorliegende Erfindung näher erläutert. Es zeigt:

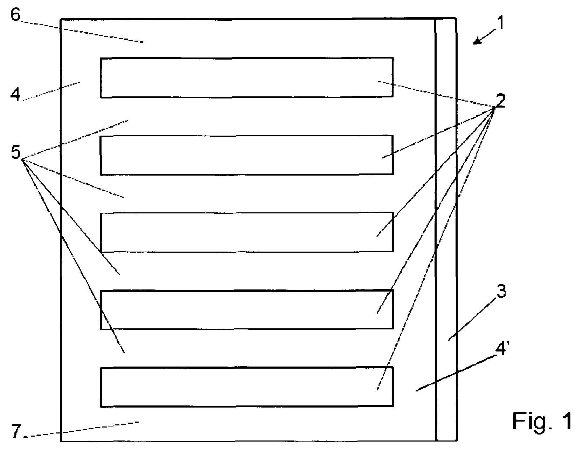

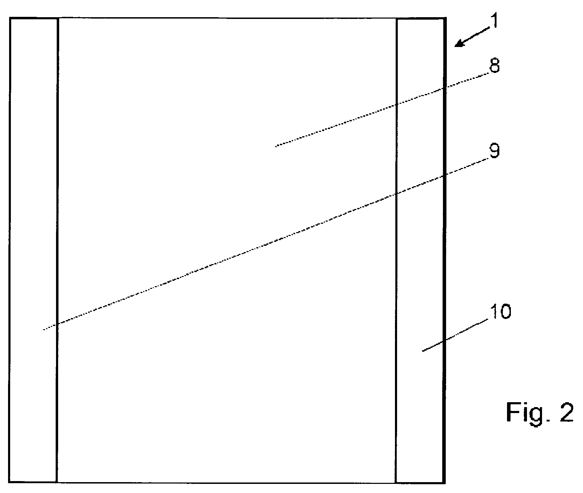

Fig. 1 die Unterseite einer erfindungsgemäßen Selbstklebebahn und Fig. 2 die Oberseite dieser Bahn.

### Beschreibung der Ausführungsarten

In den beiden Figuren ist nur ein kurzer Ausschnitt einer erfindungsgemäßen Selbstklebebahn 1 dargestellt; tatsächlich ist die Selbstklebebahn rund zehn Mal länger.

Die insgesamt mit 1 bezeichnete Bitumen-Selbstklebebahn weist an der Unterseite (siehe Fig. 1) quer zur Längsrichtung Streifen 2 auf, die mit Sand bestreut sind. Die verbleibende klebende Fläche hat dadurch die Form einer Leiter mit Holmen 4, 4' und Sprossen 5. Der Holm 4 reicht dabei unmittelbar bis zur linken Längsseite, der Holm 4' hat jedoch zur rechten Längsseite einen Abstand, weil ein an die rechte Längsseite angrenzender Streifen 3 mit Sand bestreut ist, sodass der Streifen 3 nicht klebend ist.

Die Oberseite der Selbstklebebahn 1 (siehe Fig. 2) ist mit Ausnahme von zwei Randstreifen 9 und 10 mit Sand bestreut, sodass sich in der Mitte eine relativ große, nicht klebende Fläche 8 ergibt. Die beiden Randstreifen 9 und 10 sind vor dem Verlegen mit einer Kaschier- oder Trennfolie abgedeckt, damit die aufgerollte Bahn nicht in sich verklebt. Die Kaschier- oder Trennfolie wird während des Verlegens entfernt.

Wenn beim Verlegen benachbarter Bahnen der Holm 4 auf dem Randstreifen 10 zu liegen kommt, verkleben die Bahnen selbst. Wenn man zusätzlich flämmen möchte, verlegt man die Bahnen so, dass der Streifen 3 auf dem Randstreifen 9 zu liegen kommt. Infolge der Sandbestreuung des Streifens 3 verklebt dieser nicht von selbst, sondern erst, wenn dieser mit einem Flämmgerät erhitzt wird. Man kann ihn also unmittelbar nach dem Verlegen anheben (da er nicht von selbst verklebt), mit dem Flämmgerät die Fuge erhitzen und dann wieder auflegen, wodurch er sicher mit dem Randstreifen 9 verschmilzt.

Die Stückelung von Bahnen in Längsrichtung ist ebenfalls einfach möglich, da infolge des durchgehenden ersten Holms 6 bzw. letzten Holms 7 eine durchgehende Verbindung über die gesamte Breitseite möglich ist. Dies ist selbst dann der Fall, wenn der erste bzw. letzte Holm 6, 7 nicht unmittelbar an die Breitseite grenzt, sondern durch einen ganzen oder geteilten Streifen 2 davon entfernt ist.

Die Oberseite muss im mittleren Bereich nicht durchgehend nicht klebend sein. Wenn auch an der Oberseite eine Verklebung gewünscht ist, kann sie durchgehend klebend sein, wenn eine partielle Verklebung gewünscht ist, können einzelne Streifen analog wie an der Unterseite nicht klebend ausgebildet sein.

## Patentansprüche

1. Bitumen-Selbstklebebahn (1) mit partieller Verklebung auf der Unterseite, wobei die Breite der Selbstklebebahn geringer als deren Länge ist, **dadurch gekennzeichnet, dass** auf der Unterseite Streifen (2) mit einer nicht klebenden Schicht versehen sind, die parallel zur Breitseite der Selbstklebebahn angebracht sind und im Abstand zu den Längsseiten enden, wobei die Streifen (2) vollständig voneinander getrennt sind.

2. Selbstklebebahn nach Anspruch 1, **dadurch gekennzeichnet, dass** die nicht klebende Schicht der Streifen (2) durch aufgestreuten Sand, Vliese, Folien oder andere Trennmaterialien gebildet ist.

3. Selbstklebebahn nach Anspruch 1 oder 2, **dadurch gekennzeichnet, dass** die Oberseite mit Ausnahme von zwei Randstreifen (9, 10) parallel zu den Längsseiten nicht klebend, z.B. bestreut ist.

4. Selbstklebebahn nach Anspruch 3, **dadurch gekennzeichnet, dass** die Unterseite entlang einer Längsseite einen nicht klebenden Streifen (3) aufweist und auf der anderen Längsseite einen klebenden Streifen (4) aufweist.

## Claims

1. A bituminous self-adhesive web (1) with partial bonding on the underside, the width of the self-adhesive web being less than its length, **characterized in that** stripe-like regions (2) that have a non-adhesive coating are provided on the underside, said regions being arranged parallel to the short side of the self-adhesive web and ending at a spacing from the longitudinal sides, the stripe-like regions (2) being completely separated from one another.

2. A self-adhesive web according to Claim 1, **characterized in that** the non-adhesive coating of the stripe-like regions (2) is formed by strewn-on sand, non-woven materials, films, or other separating materials.

3. A self-adhesive web according to Claim 1 or 2, **characterized in that** the upper side is non-adhesive, e.g. it is strewn with non-adhesive material, apart from two edge strips (9, 10) that are parallel to the longitudinal sides.

4. A self-adhesive web according to Claim 3, **characterized in that** the underside has a non-adhesive strip (3) along one longitudinal side and an adhesive strip (4) on the other longitudinal side.

## Revendications

1. Feuille bitumeuse autocollante (1) dont une partie de la face inférieure assure l'adhérence, la largeur de ladite feuille autocollante étant inférieure à sa longueur, **caractérisée en ce que** sa face inférieure est pourvue de bandes (2) qui comportent une couche non-adhésive et qui sont placées parallèlement au côté largeur de la feuille autocollante de manière à se terminer à distance des côtés longueur, les bandes (2) étant entièrement séparées les unes des autres.

2. Feuille autocollante selon la revendication 1, **caractérisée en ce que** la couche non-adhésive des bandes (2) est formée par des grains de sable éparpillés, des non-tissés, des feuilles ou d'autres matériaux à effet séparateur.

3. Feuille autocollante selon les revendications 1 ou 2, **caractérisée en ce qu'**à l'exception de deux bandes marginales (9, 10), situées parallèlement aux côtés longueur, la face supérieure est non-adhésive, par exemple du fait de la présence de matières granuleuses.

4. Feuille autocollante selon la revendication 3, **caractérisée en ce que** la face inférieure est pourvue, le long d'un côté longueur, d'une bande non-adhésive (3) et, sur l'autre côté longueur, d'une bande adhésive (4) .
